Europäisches Patentamt

European Patent Office

Office européen des brevets

(11) Publication number: **0 240 116**
A1

## EUROPEAN PATENT APPLICATION

(21) Application number: 87301240.5

(22) Date of filing: 13.02.87

(51) Int. Cl.4: **B62D 1/18**

(30) Priority: 28.02.86 GB 8604989

(43) Date of publication of application:
07.10.87 Bulletin 87/41

(84) Designated Contracting States:
DE FR IT

(71) Applicant: TRW CAM GEARS LIMITED
Old Church Road
Clevedon Avon BS21 6NJ(GB)

(72) Inventor: Adams, Frederick John
Pelba 27 Princes Road
Clevedon Avon(GB)

(74) Representative: Walters, Frederick James et al
Urquhart-Dykes & Lord 91 Wimpole Street
London W1M 8AH(GB)

(54) A vehicle with a collapsible steering column assembly.

(57) A vehicle has a steering column I and a collapsible support 5 which is cantilevered from a bulkhead 4. The support 5 is U-shaped having legs 5a and a bridging piece 5b on which is fixedly mounted a bearing housing 3 for the steering column. The lower ends of the legs 5a are fixedly mounted by bolts 5c on the bulkhead. The legs 5a are of sheet metal or plastics, located in a vertical plane and are apertured, corrugated, ribbed, flanged or otherwise profiled to provide regions of relative strength and weakness which determine the characteristics with which the support will collapse. The support 5 may have provision for adjusting the angle of tilt of the, or an upper part length of the, steering column I.

FIG.1.

EP 0 240 116 A1

**"A vehicle with a collapsible steering column assembly"**

### TECHNICAL FIELD & BACKGROUND ART

The present invention relates to a vehicle having a collapsible steering column assembly. Vehicle steering column assemblies which collapse to absorb energy in response to bodily impact from a driver of the vehicle on a steering wheel mounted on the column are known in which a part of the assembly deforms to reduce its effective length or crumple and provide the required energy absorbing characteristics. Conventionally, a collapsible steering column is supported at or near its upper end (that is the end nearest to the steering wheel bearing in mind that a steering column is usually inclined downwardly from the steering wheel) by a break-away bracket or similar fixing which, in addition to supporting the assembly and alleviating vibration, permits the assembly to break-away and collapse in response to bodily impact on the steering wheel; an example of this kind of assembly is discussed in G.B. Specification 1,322,233. The provision of the break-away bracket at the upper end of the steering column assembly is generally considered as an expensive component in the overall cost of manufacture and installation. It also has the disadvantage that the structure of the vehicle must be of a type in which a bulkhead or frame to the passenger compartment is appropriately located for the break-away bracket to be attached thereto and frequently the vehicle design does not conveniently permit such attachment.

It has also been proposed to provide a collapsible steering column assembly which alleviates the requirement for the aforementioned break-away bracket fixing by supporting a steering column of contractible effective length within a pot-shaped deformable element which crumples under bodily impact. An example of this latter arrangement is disclosed in G.B. Specification No. 1,359,760 from which it will be apparent that this proposal has the disadvantage that the pot-shaped element will usually be a relatively large and bulky projection around the steering column within the passenger compartment and, because of its bulk and design configuration, relatively expensive.

It is an object of the present invention to provide a vehicle with a collapsible or energy absorbing steering column assembly by which the disadvantages of the aforementioned prior proposals may be alleviated.

### STATEMENT OF INVENTION & ADVANTAGES

According to the present invention there is provided a vehicle having an assembly of a steering column and support means for said column and which assembly is cantilevered from a forward bulkhead of the vehicle and is collapsible by bodily impact from a driver on a steering wheel located at an upper end of the column, and wherein the support means comprises legs extending alongside the column, said legs being fixedly secured at their upper ends to the column adjacent the upper end of the column and supporting a bearing within which the column is rotatable and being fixedly secured at their lower ends to the forward bulkhead, the legs being deformable to contract their effective length in response to said bodily impact.

Throughout the present Specification it is to be realised that by the phrase "fixedly secured" is meant that the connection referred to is not intended to break-away in response to bodily impact on the assembly; and the phrases "upper end" and "lower end" are relative to the steering wheel, the upper end being that end which is nearest to the steering wheel and the lower end being that end which is furthest from the steering wheel (it being appreciated that in the majority of vehicles the steering column will be inclined downwardly from the steering wheel but that such an arrangement is not essential to the present invention where, for example, the steering column may be horizontal). Furthermore, the phrase "forward bulkhead" is intended to include a support frame, firewall or the like to the passenger compartment of the vehicle.

Preferably the legs are of sheet or plate-like form disposed alongside the steering column with the width of the sheets and spacing between the sheets being considerably less than the length of the legs to provide a generally slim-line assembly which is cantilevered from the forward bulkhead - thereby alleviating a bulky protrusion into the passenger compartment. The legs will be suitably profiled with curves, corrugations or the like, apertured, ribbed or flanged to provide required energy absorbing characteristics when collapsing and effectively reducing their length in response to bodily impact on the steering wheel. Conveniently the legs are formed as simple and inexpensive pressings in metal although they may be formed otherwise, possibly as plastics mouldings.

In a preferred structure the support means is of a generally "U" shaped configuration with the two legs extending alongside the steering column and with the steering column disposed between the legs. The bridging part of the "U" shape conveniently provides a mounting by which the support means is fixedly secured to the upper end of the steering column for rotatably supporting that column. The "U" shaped configuration is conveniently a single component pressing. With the "U" shaped support means and the legs of sheet or plate-like form it is preferred that the general plane of the sheets is disposed upwardly (usually vertically) to alleviate vibration of the steering column in a vertical plane.

If required the lower ends of the legs can support a bearing for the lower end of the steering column. Usually the lower ends of the legs will be flanged or angled for bolting to the forward bulkhead of the vehicle.

The steering column will usually comprise a shaft of contractible effective length, for example being a telescopic or a flexible drive shaft as is well known in energy absorbing steering columns. However, the present invention may incorporate a steering column of fixed or rigid length which is intended to be displaced forwardly of the vehicle on collapse of the assembly where the vehicle structure will permit for such forward displacement.

The upper end of the steering column may be adjustably connected to the upper end of the support means to permit the steering column being adjustably tilted relative to the support means, either by tilting the steering column as a whole or by tilting an upper part length of the steering column relative to its lower part length.

DRAWINGS

Embodiments of the present invention will now be described, by way of example only, with reference to the accompanying illustrative drawings in which:

Figures 1 to 3 diagrammatically illustrate collapsible steering column assemblies fitted to a vehicle in accordance with the invention;

Figures 4 to 9 illustrate various forms of support means suitable for use in the assemblies shown in Figures 1 to 3, and

Figure 10 shows a means for adjusting and locking the tilt angle of a tiltable column which may be assembled with the support means of Figure 5.

DETAILED DESCRIPTION OF DRAWINGS

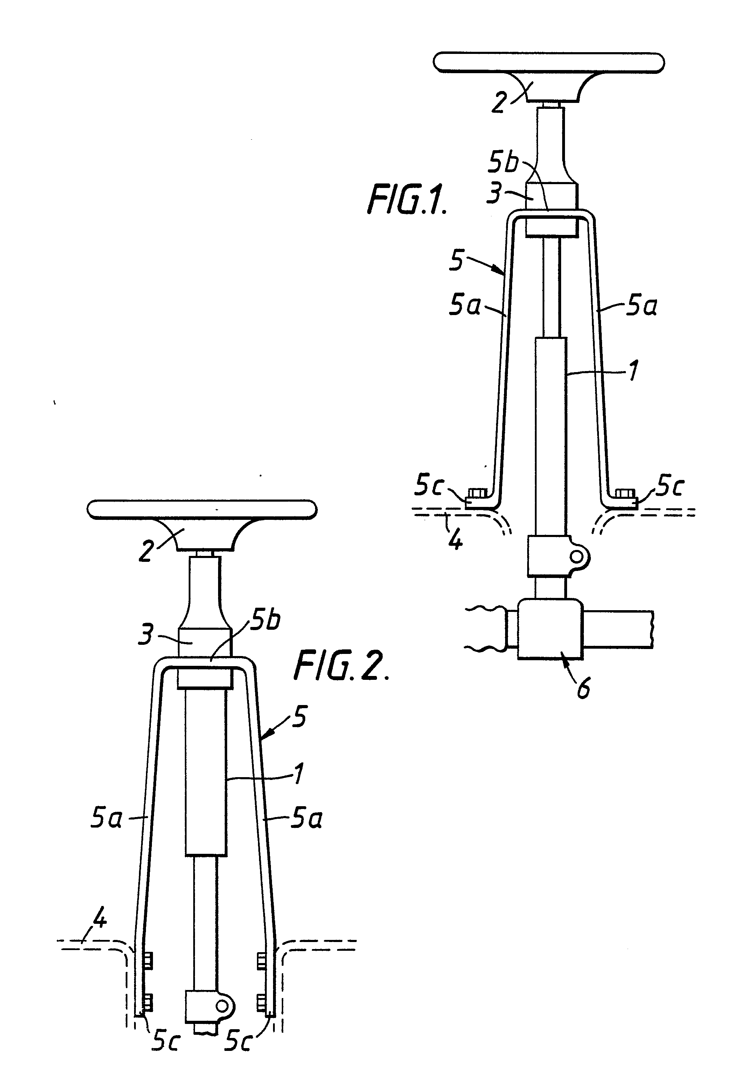

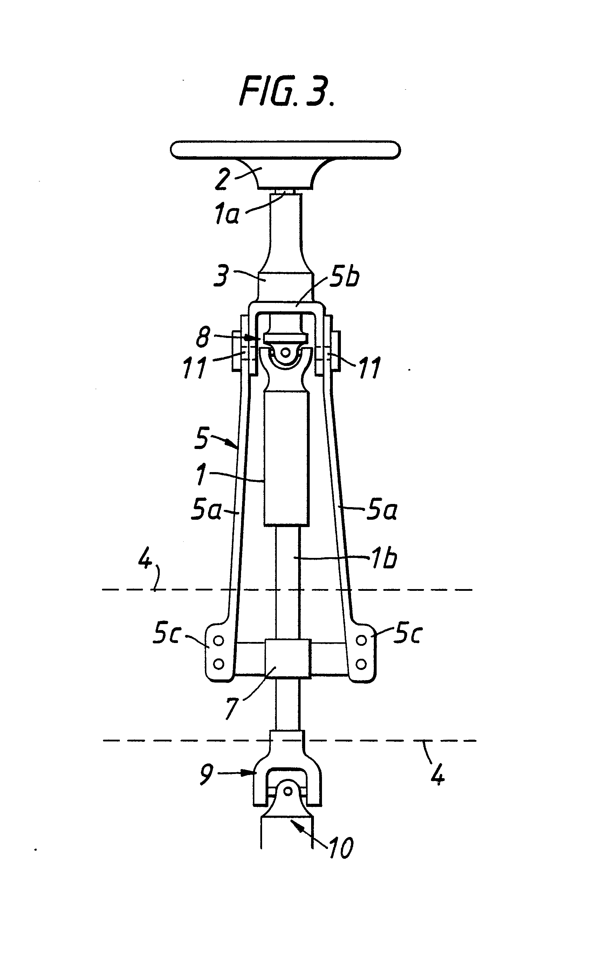

Each of the steering column assemblies shown in Figures 1 to 3 has a steering column 1 which is of conventional telescopic structure to be contractible in length. The upper end of the column 1 has fitted thereto a steering wheel 2 and is rotatably mounted in a bearing housing 3. The column 1 projects rearwardly and upwardly into the passenger compartment of the vehicle through a forward bulkhead or firewall 4. The projection of the steering column 1 is supported for its projection into the passenger compartment by a "U"-shaped bracket 5 which is mounted as a cantilever on the bulkhead 4. The bracket 5, which is conveniently formed by sheet metal pressing, has its legs 5a extending alongside the steering column 1 with the column disposed between those legs. The part 5b of the bracket 5 which bridges the legs 5a at the upper end of the steering column is fixedly secured to, and provides a mounting for, the bearing housing 3. The lower ends 5c of the legs 5a are suitably flanged or otherwise shaped to be fixedly secured by bolts to the bulkhead 4. In Figure 1 the lower ends 5c are flanged for bolting to a forward face of the bulkhead 4, in Figure 2 the ends 5c are bolted to side faces of the bulkhead, and in Figure 3 the ends 5c are flanged for bolting to an overhead or underlying face of the bulkhead.

In Figures 1 and 2 the lower end of the steering column is conveniently regarded as being supported solely by direct engagement of the column with a steering gear 6 while in Figure 3 the lower end of the steering column 1 is rotatably supported in a bearing 7 carried by the lower ends 5c of the support bracket 5. In Figure 3 it will be noted that an upper part length 1a of the steering column is coupled to a lower part length 1b of the column through a Hookes joint 8 located downwardly of the bridging part 5b while the lower part length 1b of the steering column is coupled through a Hookes joint 9 to a steering gear 10. So that the steering wheel 2 in Figure 3 can be positioned at a height convenient for the driver, the part length 1a of the steering column can be tilted in a vertical plane and locked relative to the part length 1b; to permit this facility the bridging part 5b of the support is formed as a member separate from the legs 5a and is connected to those legs by trunnions 11 which permit the upper part length of the steering column and the bridging part 5b to rotate about an horizontal axis that coincides with the joint 8 - appropriate locking means (not shown) is provided for retaining the upper part length of the steering column and the bridging part in the angle of tilt to which they are adjusted.

The sheet metal of the legs 5a has a width which is considerably less than the length of the legs and is located in an upwardly extending, preferably vertical, plane so that the cantilever mounting of the bracket 5 firmly supports the upper end of the steering column and alleviates vibration in that column. Furthermore, the distance between the legs 5a is considerably less than the length of those legs so that the assembly of the steering column I with the support 5 provides a generally slim-line cantilevered projection into the passenger compartment.

Each of the assemblies shown in Figures I to 3 functions similarly when the steering wheel 2 is subjected to violent bodily impact from the driver (as may occur if the vehicle is involved in a head-on collision) in that the legs 5a collapse or crumple simultaneously with the steering column I telescoping to reduce the overall effective length of the assembly while the bridging part 5b and the lower ends 5c remain fixedly secured to the housing 3 and bulkhead 4 respectively. The collapse of the legs 5a and possibly the telescoping of the steering column I) serves to absorb the energy of the impact and it will be appreciated that the shape or configuration of the legs 5a will be determined as appropriate to provide the required energy absorption characteristics and/or directional control in the forward displacement of the steering wheel 2.

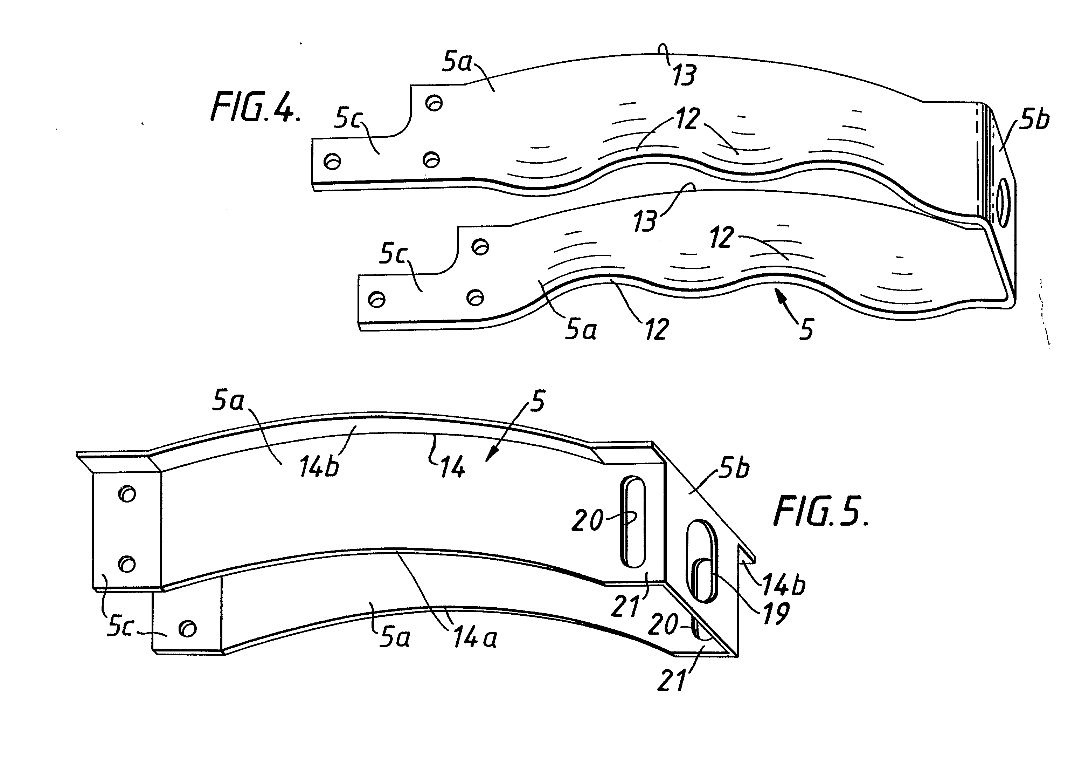

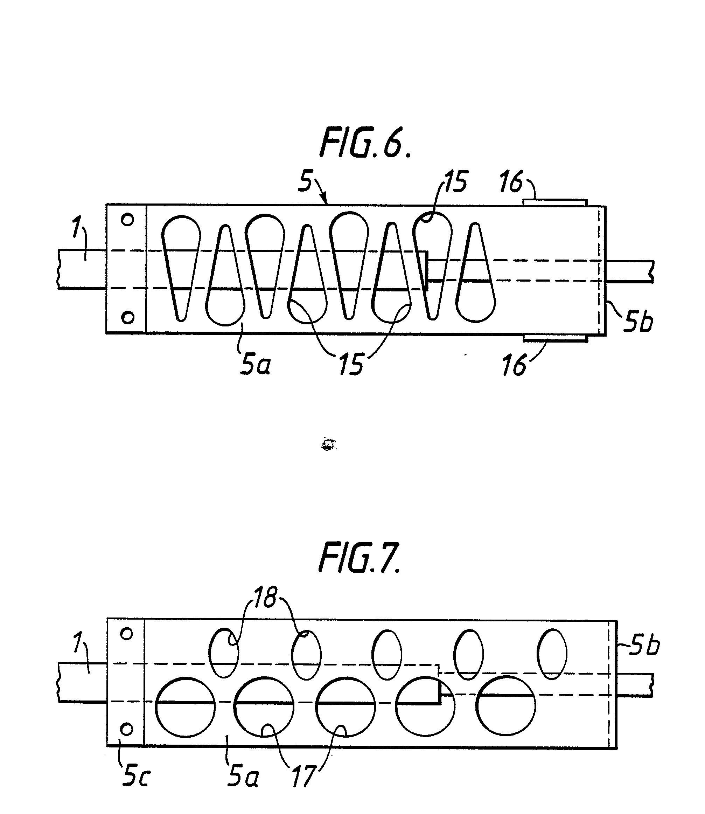

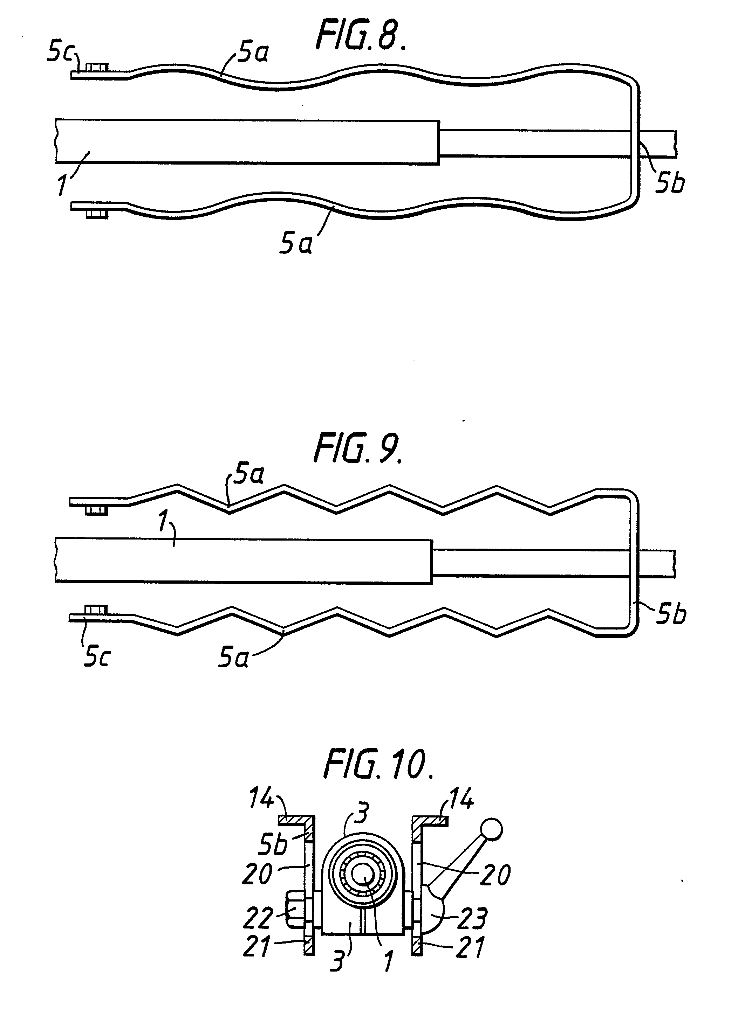

Examples of different forms of the "U" shaped support bracket 5 are shown in Figures 4 to 9 in each of which the bracket 5 is basically a one piece component suitable for use in the assemblies of Figures I and 2, it being appreciated that the modifications necessary to the bracket to incorporate the adjustable tilting facility of Figure 3 will be readily apparent to persons skilled in the art. In Figure 4 the sheet material of the legs 5a is provided with a wavy or corrugated profile I2 along adjacent longitudinal side edges and this profile extends part-way over the width of the legs while the opposing longitudinal side edges I3 have smooth convex profiles in the general plane of the sheet material; this profiling will encourage the legs 5 a to collapse and the bracket 5 to bend downwardly in Figure 4 (or upwardly by inversion) as may be considered appropriate to direct the displacement of the steering wheel. A similar bending effect of the bracket 5 may be achieved by the arrangement in Figure 5 where adjacent longitudinal, convex, side edges I4 of the legs 5a are effectively strengthened relative to opposing concave side edges I4a by the provision of external flanges I4b. The legs 5a of the bracket shown in Figure 6 include perforations I5 which are generally of triangular or pear shape and are disposed in the legs in a manner which encourages the bracket to collapse along the normal line of the steering column I. The apertures I5 provide specific areas of weakness in the bracket 5 but, if required, ties I6 (such as metal plates welded to extend between the legs 5 a) can be provided to stiffen or strengthen the legs over specific part lengths. In Figure 7 the legs 5a of the bracket are again apertured to provide predetermined areas of weakness and thereby determine the characteristics with which the bracket will collapse under impact but in this example it will be noted that more material has been removed by the apertures I7 along one side edge of each leg than by the apertures I8 along the other side edge of the respective leg - thereby encouraging the bracket to collapse with a bending mode similarly to the embodiments of Figures 4 and 5. Figures 8 and 9 respectively illustrate a wave profile and a saw tooth profile which can be pressed into the legs 5a to determine the characteristics with which the brackets will collapse. It will be apparent that any combination of the aforementioned profiles, apertures, ties or flanges can be utilised, either locally or generally on the legs 5a to provide specific modes and characteristics with which the bracket 5 will collapse as may be deemed appropriate for the vehicle in which it is installed.

Figure 3, as previously discussed, includes the facility for tilting the upper part of the steering column relative to the lower part. However, in some installations the steering column may be tiltable as a whole, for example if the joint 8 is omitted in Figure 3 so that the steering column I is capable of tilting only about the joint 9. With this latter arrangement the bracket 5 may be modified as shown in Figure 5 to include a slot I9 through which the steering column I extends in the bridging part 5b and opposed slots 20 in opposed side faces 2I of the bridging part which are intended to locate adjustable/locking bolts by which the bearing housing 3 is fixedly secured to the bridging part. This arrangement is best seen in Figure I0 where the bearing housing 3 is located between the side faces 2I of the bridging part 5b so that the steering column I extends through the slot I9. The bearing housing 3 is fixedly secured to the bridging part 5b by a bolt 22 which extends through the housing 3 and the slots 20 and is retained by a locking lever 23. By release of the lever 23 it will be apparent that the bolt 22 and steering column I can be displaced to a desired position along the respective slots 20 and I9 as the steering column I is tilted about the Hookes joint 9 at its lower end and the steering wheel is positioned at an appropriate height, following which the lever 23 can fixedly secure the housing 3 to the bridging part 5 b.

## Claims

I. A vehicle having an assembly of a steering column and support means for said column and which assembly is cantilevered from a forward bulkhead of the vehicle and is collapsible by bodily impact from a driver on a steering wheel located at an upper end of the column, and wherein the support means comprises legs extending alongside the column, said legs being fixedly secured (as herein defined) at their upper ends to the column adjacent the upper end of the column and supporting a bearing within which the column is rotatable and being fixedly secured at their lower ends to the forward bulkhead, the legs being deformable to contract their effective length in response to said bodily impact.

2. A vehicle as claimed in claim 1 in which the legs are of sheet or plate-like form disposed alongside the steering column with the width of the sheets and the spacing between the sheets being less than the length of the legs to present a slimline assembly which is cantilevered from the forward bulkhead.

3. A vehicle as claimed in either claim 1 or claim 2 in which the support means is of generally "U" shape configuration with the two legs extending alongside the steering column and with the steering column disposed between the legs.

4. A vehicle as claimed in claim 3 in which the bridging portion of the "U" shape provides a mounting by which the support means is fixedly secured to the upper end of the steering column.

5. A vehicle as claimed in either claim 3 or claim 4 in which the legs are generally of sheet or plate-like form and the plane of said sheets is substantially vertical.

6. A vehicle as claimed in any one of the preceding claims in which the lower ends of said legs are flanged or angled and bolted to the forward bulkhead.

7. A vehicle as claimed in any one of the preceding claims in which the steering column or an upper part length thereof is adjustably tiltable in a substantially vertical plane relative to the legs.

8. A vehicle as claimed in any one of the preceding claims in which the support means is formed as a single component.

9. A vehicle as claimed in claim 8 when appendant on claim 7 in which the tilting adjustment of the steering column comprises relative displacement of locking means for the column along slot means in the support means.

10. A vehicle as claimed in any one of claims 1 to 7 in which the upper end of the support means carrying the bearing is adjustably tiltable in a substantially vertical plane relative to lower length parts of the legs for adjustably tilting the, or an upper part length of the, steering column.

11. A vehicle as claimed in claim 10 and comprising locking means for retaining the upper end of the support means in a position of tilt to which it is adjusted.

12. A vehicle as claimed in any one of the preceding claims in which the lower end of the support assembly carries a second bearing within which the steering column is rotatable.

13. A vehicle as claimed in any one of the preceding claims in which the legs have predetermined areas or regions of relative weakness and strength which provide predetermined characteristics, under expected conditions of use, with which support means will collapse.

14. A vehicle as claimed in claim 13 in which regions of relative weakness are provided, for the legs by apertures, perforations, corrugations or curved profiling in the material of the legs.

15. A vehicle as claimed in either claim 13 or claim 14 in which regions of relative strength are provided for the legs by stiffening means, ribs, flanges or solid (unapertured) material in the legs.

16. A vehicle as claimed in any one of claims 13 to 15 in which the regions of weakness and strength determine the characteristics with which the support means will crumple on collapse and the direction in which the assembly will be displaced on collapse.

FIG.1.

FIG.2.

FIG. 3.

FIG.4.

FIG.5.

**FIG.6.**

**FIG.7.**

# FIG.8.

# FIG.9.

# FIG.10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 227 745 (PEUGEOT-RENAULT) * claim 1; figures 1-4 * | 1,4-6, 13,16 | B 62 D  1/18 |
| A | EP-A-0 066 308  (K. SCHMIDT) * abstract; figures 1, 2 * | 1-4,7, 9-11 | |
| A | DE-A-2 054 116  (B.M.W.) * claims 1-4; figures 3, 6 * | 1,13-16 | |
| A | FR-A-2 276 978 (PEUGEOT-RENAULT) * figures 1, 3, 5 * | 1,13-16 | |
| A | DE-B-1 949 241 (KLÖCKNER-HUMBOLDT-DEUTZ) * figure 1 * | 1,7,9 | **TECHNICAL FIELDS SEARCHED (Int. Cl.4)** B 62 D  1/00 |
| D,A | GB-A-1 322 233  (FORD) * whole document * | 1,5,13 -16 | |

The present search report has been drawn up for all claims

| Place of search | Date of completion of the search | Examiner |
|---|---|---|
| BERLIN | 19-05-1987 | KRIEGER P O |